**Europäisches Patentamt**

**European Patent Office**

**Office européen des brevets**

(19)

(11) Veröffentlichungsnummer: **0 124 696**
**B1**

(12) **EUROPÄISCHE PATENTSCHRIFT**

(45) Veröffentlichungstag der Patentschrift:
02.09.87

(51) Int. Cl.⁴: **G 01 V 5/04, G 01 V 5/12**

(21) Anmeldenummer: **84101970.6**

(22) Anmeldetag: **24.02.84**

(54) Sonde zur Einführung in Bohrlöcher zum Zwecke der Erkundung von Erzlagerstätten.

(30) Priorität: **11.04.83 DE 3312883**

(43) Veröffentlichungstag der Anmeldung:
**14.11.84 Patentblatt 84/46**

(45) Bekanntmachung des Hinweises auf die Patenterteilung:
**02.09.87 Patentblatt 87/36**

(84) Benannte Vertragsstaaten:
**AT BE CH FR GB IT LI NL SE**

(56) Entgegenhaltungen:
**DE-A-2 347 037**
**GB-A-1 259 220**
**US-A-2 578 722**
**US-A-2 830 187**
**US-A-3 404 275**

(73) Patentinhaber: **PREUSSAG Aktiengesellschaft Metall, Rammelsberger Strasse 2, D-3380 Goslar 1 (DE)**

(72) Erfinder: **Janssen, Klaus, Kaisertorstrasse 3, D-3380 Goslar (DE)**
Erfinder: **Winnacker, Helmut, Rosengasse 2A, D-3167 Ehlershausen (DE)**
Erfinder: **Johnen, Klaus, Im Reiherhorst 6, D-3007 Gehrden 1 (DE)**

(74) Vertreter: **Leine, Sigurd, Dipl.- Ing., LEINE & KÖNIG Patentanwälte Burckhardtstrasse 1, D-3000 Hannover 1 (DE)**

EP 0 124 696 B1

## Beschreibung

Die Erfindung betrifft eine Sonde der im Oberbegriff des Patentanspruchs 1 genannten Art.

Sonden der betreffenden Art sind bekannt. Sie dienen zur Erkundung von Erzlagerstätten unter Ausnutzung von Fluoreszenzen, die mittels der in der Sonde angeordneten radioaktiven Strahlungsquelle angeregt werden. Durch Auswertung der Fluoreszenzstrahlung läßt sich die Art und Beschaffenheit einer Lagerstätte feststellen. Insbesondere läßt sich feststellen, ob es sich in der Lagerstätte um Schwer- oder Buntmetallerze handelt.

Die Abstrahlung der radioaktiven Strahlung erfolgt bei den bekannten Sonden über einen großen Sektor, und auch der Empfang der Fluoreszenzstrahlung erfolgte über einen ausgedehnten Bereich mittels eines sich über den Umfang der Sonde erstreckenden Detektors, so daß eine Feinanalyse des Aufbaus der Lagerstätte nicht möglich war.

Durch die US-PS 2 909 651 ist eine Sonde der betreffenden Art bekannt, bei der die strahlungsempfindliche Fläche eines Detektors sich an dessen äußerem Umfang befindet, also im wesentlichen als zur Sondenachse koaxiale Zylinderfläche ausgebildet ist. Sie erstreckt sich daher über eine größere axiale Ausdehnung. Daher nimmt sie Strahlung aus einem verhältnismäßig großen Sektor auf, und ihr Abstand zur Strahlungsquelle ist notwendigerweise verhältnismäßig groß. Aus beidem ergibt sich eine geringe Auflösung, die eine Feinuntersuchung unmöglich macht.

Zur Feinuntersuchung des vertikalen Aufbaus war es daher bekannt, Kernbohrungen geringen Durchmessers auszuführen. Diese sind jedoch zeitraubend und kostspielig. Außerdem können Kernverluste auftreten, so daß die Vorteile im wesentlichen verlorengehen.

Durch die DE-OS 23 47 037 ist eine Bohrlochsonde bekannt, die ein zylindrisches Gehäuse aufweist, in dem eine Strahlungsquelle axial einem Detektor gegenüberliegt. Der Detektor befindet sich in einer radial verlaufenden Stirnfläche eines Zylinders und ist in seiner Gestalt nicht näher definiert. Er ist gegenüber direkter Strahlung der Strahlungsquelle durch einen rotationssymmetrischen, koaxial angeordneten Blendenkorper mit kegeligen Endflächen abgeschirmt. Wegen der kegeligen Form des Abschirmkörpers und der Anordnung der Strahlungsquelle strahlt die Strahlungsquelle mit einem beträchtlichen Streuwinkel in der Größenordnung von 90°. Damit wird die Bohrlochwandung über einen großen axialen Bereich bestrahlt und zu Fluoreszenzstrahlung angeregt, so daß sich eine geringe Auflösung bei der Untersuchung des Materials der Bohrlochwandung ergibt. Außerdem dient dieser große Streuwinkel der Strahlung der Strahlungsquelle zur Ausnutzung der Compton-Streustrahlung. Eine Feinuntersuchung des vertikalen Aufbaus einer Bohrung ist daher mit dieser bekannten Sonde nicht möglich.

Durch die US-PS 3 404 275 ist eine Methode und eine Einrichtung für die Röntgenfluoreszenzanalyse bekannt, bei der eine Strahlungsquelle am Boden einer Bohrung in einer Blende aus Blei angebracht ist, so daß aus der Bohrung ein eng begrenzter Strahl austritt, der in das das Bohrloch umgebende Material eintritt. Auf diesen Eintrittsbereich ist ein Blendenkanal in einer weiteren Blende aus Blei gerichtet, in der ein Strahlungsdetektor angeordnet ist, der die eng begrenzte Strahlung auffängt. Die Empfangsfläche des Strahlungsdetektors ist somit nicht der Strahlungsquelle zugewandt, sie hat nur eine geringe Ausdehnung und damit eine verhältnismäßig geringe Empfangsempfindlichkeit. Außerdem erfolgt bei dieser bekannten Sonde wegen der geometrischen Anordnung nur eine Untersuchung eines Punktes an der Bohrlochwandung. Die Wirksamkeit der Sonde ist daher sehr begrenzt.

Durch die GB-A-1 259 220 ist ein Röntgenstrahl-Fluoreszenanalysator bekannt, bei dem in einem zylindrischen Bleikern Kollimatoren bildende Bohrungen angeordnet sind, die ungefähr V-förmig zueinander verlaufen und in denen jeweils im Zentrum des Bleizylinders einmal eine Strahlungsquelle und einmal ein Detektor angeordnet sind. Der Detektor erstreckt sich nur über eine sehr geringe radiale Ausdehnung und hat daher eine verhältnismäßig geringe Empfindlichkeit. Außerdem ist die Empfindlichkeit des Gesamtsystems gering, da nur ein punktförmiger Bereich der Bohrlochwandung bestrahlt und abgetastet wird.

Der Erfindung liegt die Aufgabe zugrunde, eine Sonde der betreffenden Art zu schaffen, mit der von kleinkalibrigen Untersuchungsbohrlöchern aus der Aufbau von Lagerstätten, insbesondere Erzlagerstätten, genau und mit großer Auflösung und Empfindlichkeit abgetastet werden kann.

Die der Erfindung zugrundeliegende Aufgabe wird durch die im des Patentanspruch 1 angegebene Lehre gelöst.

Aufgrund der erfindungsgemäßen Anordnung der Empfangsfläche kann diese in axialer Richtung sehr nahe an die Blende bzw. Strahlungsquelle und damit auch an den durch die Blende bestimmten, im wesentlichen ringförmigen Bereich der Bohrlochwandung rücken, so daß mehr Fluoreszenzstrahlung von dem ringförmigen Bereich aufgefangen und vermieden wird, daß Strahlung von in axialer Richtung jenseits der Empfangsfläche liegenden Bereichen der Bohrlochwandung ebenfalls aufgefangen und damit die Auflösung in Bohrlochrichtung und Erkenntnisse über die Lagerstätten beeinträchtigt werden.

Gemäß einer anderen Weiterbildung der Erfindung bildet die Blende einen zur Achse der Sonde senkrecht verlaufenden, sich bis an die Innenwandung des Gehäuses erstreckenden, scheibenförmigen, insbesondere einstellbaren Schlitz. Dadurch wird die Empfangsfläche wirksam gegenüber der radioaktiven Strahlungsquelle abgeschirmt und auf einen ringförmigen Bereich der Bohrlochwandung gerichtet, von dem vorzugsweise die Fluoreszenzstrahlung durch die besondere Anordnung der Empfangsfläche aufgefangen wird.

Aufgrund der durch die Blende mit scheibenförmigem Schlitz bewirkten scheibenförmigen radioaktiven Strahlung ist der Durchtrittsbereich der Strahlung durch die Wandung des Gehäuses ebenfalls schmal, so daß auch der den Durchtritt der Strahlung durch die Wandung ermöglichende Materialbereich der Wandung entsprechend klein bemessen werden kann. Das gleiche gilt für den Bereich der von der Fluoreszenzquelle auf die Empfangsfläche des Detektors fallenden Strahlung.

Besonders zweckmäßig ist die Verwendung eines Szintillationskristalls oder eines Halbleiters als Detektor, weil dadurch aufwendige Maßnahmen und Vorrichtungen zur Kühlung entfallen können, wie sie bei bisher verwendeten Halbleiterkristallen erforderlich waren.

Die Kegelfläche, in der die Außenfläche der Blende liegt, bzw. die Verlängerung über die Spitze des Kegels hinaus schneidet zweckmäßigerweise die Empfangsfläche, läuft also nicht außerhalb davon vorbei, so daß auch kein Anteil der fluoreszierenden Strahlung auf die jeweils gegenüberliegende Bohrlochwandung treffen und dort in unerwünschter Weise weitere Fluoreszenz anregen kann.

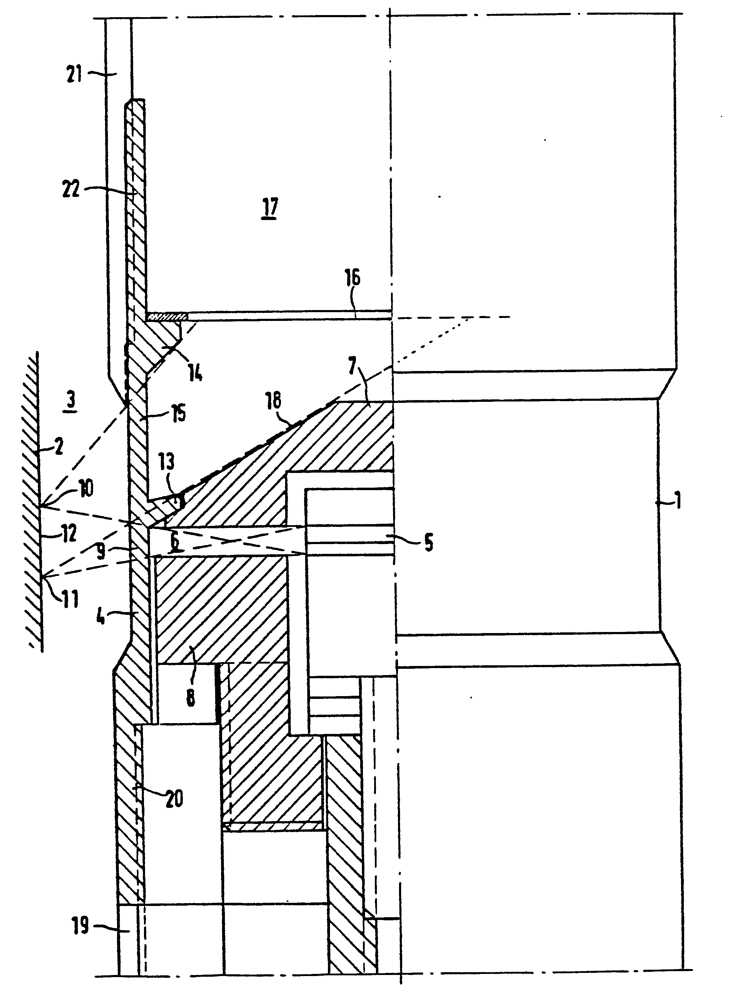

Anhand der Zeichnung soll die Erfindung an einem Ausführungsbeispiel näher erläutert werden.

Die Zeichnung zeigt ein Ausführungsbeispiel einer Sonde 1 gemäß der Erfindung, teilweise axial abgeschnitten und teilweise axial geschnitten, wobei im geschnittenen Bereich eine Wandung 2 eines Bohrloches 3 angedeutet ist. Die Sonde weist ein Gehäuse 4 auf, in dessen Innenraum sich koaxial zu dem Gehäuse eine radioaktive Strahlungsquelle 5 befindet, deren Strahlung durch einen Schlitz 6 nach außen tritt, der zwischen zwei Blendenteilen 7 und 8 gebildet ist. Die durch den Schlitz 6 begrenzte Strahlung tritt durch einen Wandungsteil 9 des Gehäuses 4 in das Bohrloch 3 ein und bestrahlt einen zwischen zwei Punkten 10 und 11 liegenden, die Form eines Ringes 12 aufweisenden Wandungsbereich der Wandung 2 des Bohrloches 3. Dieser Bereich der Bohrlochwandung wird zur Fluoreszenz angeregt je nach den in diesem Bereich befindlichen Erzen, und diese Fluoreszenzstrahlung gelangt durch einen zwischen zwei nach innen gerichteten Ansätzen 13 und 14 liegenden Wandungsteil 15, der aus Beryllium besteht und eine geringe Dämpfung hat, auf eine Empfangsfläche 16 eines Detektors 17, der ein Szintillationsdetektor oder Halbleiterdetektor sein kann und das Fluoreszenzsignal in ein davon abhängiges elektrisches Nutzsignal umwandelt.

Das Blendenteil 7 weist eine der Empfangsfläche 16 des Detektors 17 zugewandte Außenfläche 18 auf, die kegelig ist und deren Verlängerung nach außen ungefähr auf den Punkt 11 trifft, das ist die der Empfangsfläche 16 axial abgewandte ungefähre Begrenzung des bestrahlten Ringes 12 der Wandung 2 des Bohrloches 3. Durch die Kegelform kann die Fluoreszenzstrahlung aus dem Bereich des Ringes 12 im wesentlichen unbeeinträchtigt die gesamte Empfangsfläche 16 des Detektors 17 erreichen. Der Verlauf der Strahlung der Strahlungsquelle 5 und der Fluoreszenzstrahlung von dem Ring 12 ist durch dünne gestrichelte Linien angedeutet.

Das Gehäuse 4 ist unten durch ein nur angedeutetes Gehäuseteil 19 geschlossen, das in ein Innengewinde 20 eingeschraubt ist. In gleicher Weise ist das Gehäuse oben durch ein Gehäuseteil 21 geschlossen, das auf ein Außengewinde 22 aufgeschraubt ist.

Von der Sonde 1 aus erstreckt sich ein Koaxialkabel zu einer Vorschubeinrichtung, mit deren Hilfe die Sonde 1 in dem Bohrloch 3 genau bestimmbar bewegbar ist. Über das Koaxialkabel erfolgt die Stromversorgung und Übertragung des Nutzsignals von dem Detektor 17 zu einer außerhalb des Bohrloches angeordneten, nicht dargestellten Auswerteschaltung.

**Patentansprüche**

1. Sonde zur Einführung in ein Bohrloch zum Zwecke der Erkundung von Erzlagerstätten, mit einem zylindrischen Gehäuse (4), in dem konzentrisch eine radioaktive Strahlungsquelle (5) und ein gegenüber der Strahlungsquelle (5) durch eine Blende (7, 8) abgeschirmter Detektor (17) angeordnet sind, der zur Feststellung von durch die radioaktive Strahlung in der Bohrlochumgebung angeregter Fluoreszenzstrahlung dient und der eine zur Achse der Sonde (1) im wesentlichen senkrechtstehende, der Strahlungsquelle (5) zugewandte Empfangsfläche (16) aufweist, wobei die der Empfangsfläche (16) zugewandte Außenfläche (18) der Blende (7, 8) eine zu der Sonde (1) koaxiale Kegelfläche bildet, dadurch gekennzeichnet, daß sich die Empfangsfläche (16) allseitig bis an die Innenwandung des zylindrischen Gehäuses (4) erstreckt, und daß die Kegelfläche, die durch die der Empfangsfläche (16) zugewandte kegelige Außenfläche (18) bestimmt ist, die der Empfangsfläche (16) abgewandte Begrenzung (11) des durch die Blende (7, 8) bestimmten bestrahlten Ringes (12) der Wandung (2) des Bohrloches (3) schneidet.

2. Sonde nach Anspruch 1, dadurch gekennzeichnet, daß die Blende (7, 8) zur Bildung des bestrahlten Ringes (12) einen zur Achse der Sonde (1) senkrecht verlaufenden, sich bis an die Innenwandung des Gehäuses (4) erstreckenden, scheibenförmigen, insbesondere einstellbaren Schlitz (6) bildet.

3. Sonde nach Anspruch 1, <u>dadurch gekennzeichnet</u>, daß der Wandungsteil (9) des Gehäuses (4) im Bereich der Verlängerung des Schlitzes (6) der Blende (7, 8) und im Bereich der Projektion des bestrahlten Ringes (12) der Wandung (2) des Bohrloches (3) auf die Empfangsfläche (16) aus einem für die Strahlung dämpfungsarmen Material, vorzugsweise Beryllium, besteht.

4. Sonde nach Anspruch 1, <u>dadurch gekennzeichnet</u>, daß der Detektor (17) ein Szintillationskristall oder ein Halbleiterdetektor ist.

5. Sonde nach Anspruch 1, <u>dadurch gekennzeichnet</u>, daß die Kegelfläche, in der die Außenfläche (18) der Blende (7, 8) liegt, bzw. die Verlängerung der Kegelfläche über die Spitze des Kegels hinaus die Empfangsfläche (16) schneidet.

**Claims**

1. Search probe for introduction into a boring for the purpose of acquiring information concerning ore deposits, with a cylindrical housing (4), in which are concentrically arranged a radioactive radiation source (5), and a detector (17) which is shielded with respect to the radiation source (5) by a screening means (7, 8). which detector serves for determining fluorescence radiation induced by the radioactive radiation in the vicinity of the boring and which comprises a reception surface (16) disposed substantially perpendicularly of the axis of the probe (1) and facing the radiation source (5), that external surface (18) of the screening means (7, 8) which is facing the reception surface (16) forming a conical surface coaxial with the probe,
characterised in that the reception surface (16) is extended on all sides up to the inside wall of the cylindrical housing (4), and that the conical surface which is defined by the conical external surface (18) facing the reception surface (16) intersects the boundary (11), remote from the reception surface (16), of that irradiated ring (12) of the wall (2) of the boring (3) which is determined by the screening means (7, 8).

2. Probe according to claim 1, characterised in that the screening means (7, 8) for forming the irradiated ring (12) forms a disc-shaped and more especially adjustable slit (6), which extends perpendicularly of the axis of the probe (1) and as far as the internal wall of the housing (4).

3. Probe according to claim 1, characterised in that the wall section (9) of the housing (4) in the region of the extension of the slit (6) of the diaphragm (7, 8) and in the region of the projection of the irradiated ring (12) of the wall (2) of the boring (3) on to the reception surface (16) consists of a material, advantageously beryllium, which has low damping qualities as regards the radiation.

4. Probe according to claim 1, characterised in that the detector (17) is a scintillation crystal or a semiconductor detector.

5. Probe according to claim 1, characterised in that the conical surface in which is disposed the external surface (18) of the screening means (7, 8) or respectively the extension of the conical surface beyond the tip of the cone intersects the reception surface (16).

**Revendications**

1. Sonde destinée à être introduite dans un trou de forage pour la détection des gisements de minerais, comportant un carter cylindrique (4) dans lequel sont disposés concentriquement une source de rayonnement radio-actif (5) et un détecteur (17), protégé de la source de rayonnement (5) par un écran-diaphragme (7, 8), détecteur qui sert à déterminer le rayonnement fluorescent excité par le rayonnement radio-actif dans l'environnement du trou de forage et qui comporte une surface réceptrice (16) orientée sensiblement perpendiculairement à l'axe de la sonde 1 et dirigée vers la source de rayonnement (5), la surface extérieure (18) de l'écran-diaphragme (7, 8) qui est dirigée, vers la surface réceptrice (16) formant une surface conique coaxiale à la sonde 1, caractérisée en ce que la surface réceptrice (16) s'étend dans toutes les directions jusqu'à la paroi intérieure du carter cylindrique (4) et en ce que la surface conique, qui est définie par la surface extérieure conique (18) dirigée vers la surface réceptrice (16), recoupe la lisière (11), accessible à la surface réceptrice (16), de l'anneau irradié (12), défini par l'écran-diaphragme (7, 8), sur la paroi (2) du trou foré (3).

2. Sonde selon la revendication 1, caractérisée en ce que l'écrandiaphragme (7, 8) servant à former l'anneau irradié (12) forme une fente (6) en forme de disque, notamment réglable, orientée perpendiculairement à l'xe de la sonde (1) et s'étendant jusqu'à la paroi intérieure du carter (4).

3. Sonde selon la revendication 1, caracterisée en ce que la partie de paroi (9) du carter (4) dans la zone de prolongement de la fente (6) de l'écran-diaphragme (7, 8) et dans la zone de projection de l'anneau irradié (12) de la paroi (2) du trou foré (3) sur la surface réceptrice (15), est constituée en un matériau exerçant peu d'effet d'amortissement sur le rayonnement, de préférence du beryllium.

4. Sonde selon la revendication 1, caractérisée en ce que le détecteur (17) est un cristal à scintillations ou un détecteur semiconducteur.

5. Sonde selon la revendication 1, caractérisée en ce que la surface conique dans laquelle se trouve la surface extérieure (18) de l'écran-diaphragme (7, 8), ou le prolongement de la surface conique au-dessus du sommet du cône, recoupe la surface réceptrice (16).